# EUROPEAN PATENT APPLICATION

(11) **EP 4 120 747 A1**
(43) Date of publication of application: **18.01.2023**
(21) Application number: 21767850.7
(22) Date of filing: 12.03.2021
(51) Int. Cl.: H04W 52/02

(54) **TRANSMISSION CONFIGURATION METHOD AND ELECTRONIC DEVICE**

(30) Priority: 13.03.2020 CN 202010177055
(71) Applicant: Vivo Mobile Communication Co., Ltd., Dongguan, Guangdong 523863 (CN)
(72) Inventor: ZENG, Yu, Dongguan, Guangdong 523863 (CN); LIU, Siqi, Dongguan, Guangdong 523863 (CN); JI, Zichao, Dongguan, Guangdong 523863 (CN)
(74) Representative: Murgitroyd & Company
(86) International application number: PCT/CN2021/080398
(87) International publication number: WO 2021/180197

(57) **Abstract**

Embodiments of the present invention provide a transmission or reception configuration method and an electronic device. The method includes: executing, according to first transmission or reception configuration information, a target behavior in a time resource configured by the first transmission or reception configuration information, where the first transmission or reception configuration information is at least one set of transmission or reception configuration information in N sets of transmission or reception configuration information.

## Description

### CROSS-REFERENCE TO RELATED APPLICATION

This application claims priority to Chinese Patent Application No. 202010177055.5 filed on March 13, 2020, the entire content of which is incorporated in its entirety by reference herein.

### TECHNICAL FIELD

The present invention relates to the field of communication technologies, and in particular, to a transmission or reception configuration method and an electronic device.

### BACKGROUND

Discontinuous reception (Discontinuous Reception, DRX) is introduced into both long term evolution (Long Term Evolution, LTE) and new radio (New Radio, NR), to implement power saving of a terminal by configuring DRX on and off time.

After the terminal is configured with DRX, if data transmitted or received by the terminal fails to be decoded, the terminal needs to enter an activation time to monitor a control channel and wait for network scheduled retransmission.

Within an on duration (On Duration), if the terminal is scheduled and receive or transmit data within a slot, the terminal is likely to be scheduled continuously within the following several slots. Therefore, each time the terminal is scheduled to initially transmit data, a drx-InactivityTimer (drx-InactivityTimer) is started or restarted, and the terminal is always in an active state until the timer times out.

For downlink data reception, after downlink data transmission indicated by a physical downlink control channel (Physical Downlink Control Channel, PDCCH) is received, the terminal starts a downlink HARQ round trip time timer (HARQ Round Trip Timer Timer) for a corresponding hybrid automatic repeat request (Hybrid Automatic Repeat reQuest, HARQ) process. If data of the HARQ process fails to be decoded after the downlink HARQ round trip time timer times out, the terminal starts a drx-RetransmissionTimer (drx-RetransmissionTimer), enters an active state to monitor the PDCCH, and waits for network scheduled transmission.

For uplink data transmission, after uplink data transmission indicated by the PDCCH is received, the terminal starts an uplink HARQ round trip time timer for a corresponding HARQ process. After the uplink HARQ round trip time timer times out, the terminal starts a drx-RetransmissionTimer, enters an active state to monitor the PDCCH, and waits for network scheduled transmission.

A sidelink (Sidelink) is introduced into both long term evolution (Long Term Evolution, LTE) and new radio (New Radio, NR), and is used for direct data transmission performed between terminals without going through a network device.

In Uu DRX, a base station configures a set of Uu DRX for a terminal and only limits behavior that the terminal monitors the PDCCH, and a transmit end of the PDCCH is one or two base stations establishing a radio resource control (Radio Resource Control, RRC) connection with a UE. However, in sidelink DRX, a UE may need to monitor sidelink control information (Sidelink Control Information, SCI) of a plurality of UEs, RRC connection may not be established between the UE and a UE transmitting SCI, and requirements of different terminal types, transmission modes (broadcast, multicast, or unicast), or resource scheduling modes may also be different, and a center scheduling node such as the base station may not exist in the sidelink. Therefore, the existing Uu DRX cannot match with sidelink requirements.

### SUMMARY

Embodiments of the present invention provide a transmission or reception configuration method and an electronic device, to resolve the problem that Uu DRX in the related art cannot match with sidelink requirements.

To resolve the foregoing technical problem, the embodiments of the present invention are implemented as follows: a transmission or reception configuration method is provided, applied to a first electronic device, the method including:
executing, according to first transmission or reception configuration information, a target behavior in a time resource configured by the first transmission or reception configuration information, where
the first transmission or reception configuration information is at least one set of transmission or reception configuration information in N sets of transmission or reception configuration information; and N is an integer greater than or equal to 1.

The embodiments of the present invention further provide a transmission or reception configuration method, applied to a second electronic device, the method including:
configuring or pre-configuring N sets of transmission or reception configuration information for a first electronic device, where the transmission or reception configuration information is used for configuring a time resource for the first electronic device to execute a target behavior; and N is an integer greater than or equal to 1.

The embodiments of the present invention further provide a transmission or reception configuration method, applied to a third electronic device, the method including:
in a case that a first preset condition is met, executing a target behavior or entering a sleep state in a time resource configured by default transmission or reception configuration information; and/or
in a case that a second preset condition is met, entering a wakeup state and executing a target behavior on a first reserved resource of the third electronic device; and/or
in a case that a third preset condition is met, entering a sleep state on a second reserved resource of the third electronic device.

The embodiments of the present invention further provide an electronic device, the electronic device being a first electronic device and including:
a first execution module, configured to execute, according to first transmission or reception configuration information, a target behavior in a time resource configured by the first transmission or reception configuration information, where
the first transmission or reception configuration information is at least one set of transmission or reception configuration information in N sets of transmission or reception configuration information; and N is an integer greater than or equal to 1.

The embodiments of the present invention further provide an electronic device, the electronic device being a second electronic device and including:
a configuration module, configured to configure or pre-configure N sets of transmission or reception configuration information for a first electronic device, where the transmission or reception configuration information is used for configuring a time resource for the first electronic device to execute a target behavior; and N is an integer greater than or equal to 1.

The embodiments of the present invention further provide an electronic device, the electronic device being a third electronic device and including:
a second execution module, configured to: in a case that a first preset condition is met, execute a target behavior or enter a sleep state in a time resource configured by default transmission or reception configuration information; and/or
in a case that a second preset condition is met, enter a wakeup state and execute a target behavior on a first reserved resource of the third electronic device; and/or
in a case that a third preset condition is met, enter a sleep state on a second reserved resource of the third electronic device.

The embodiments of the present invention further provide an electronic device, including a processor, a memory, and a computer program stored in the memory and executable on the processor, where when the computer program is executed by the processor, the steps of the transmission or reception configuration method described above are implemented.

The embodiments of the present invention further provide a computer-readable storage medium, storing a computer program, where when the computer program is executed by a processor, the steps of the transmission or reception configuration method described above are implemented.

In the embodiments of the present invention, through configuration of N sets of transmission or reception configuration information, the first electronic device flexibly selects matching first transmission or reception configuration information to perform communication, so that the sidelink communication requirements can be matched. After the first electronic device determines the first transmission or reception configuration information, the overheads for detecting control information can be reduced, thereby saving power.

### BRIEF DESCRIPTION OF THE DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other accompanying drawings from these accompanying drawings without creative efforts.
FIG. 1 is a schematic diagram one of steps of a transmission or reception configuration method according to an embodiment of the present invention;
FIG. 2 is a schematic diagram two of steps of a transmission or reception configuration method according to an embodiment of the present invention;
FIG. 3 is a schematic diagram three of steps of a transmission or reception configuration method according to an embodiment of the present invention;
FIG. 4 is a schematic structural diagram one of an electronic device according to an embodiment of the present invention;
FIG. 5 is a schematic structural diagram two of an electronic device according to an embodiment of the present invention;
FIG. 6 is a schematic structural diagram three of an electronic device according to an embodiment of the present invention;
FIG. 7 is a schematic structural diagram of a terminal according to an embodiment of the present invention; and
FIG. 8 is a schematic structural diagram of a network-side device according to an embodiment of the present invention.

### DETAILED DESCRIPTION

The following clearly and completely describes the technical solutions in the embodiments of the present invention with reference to the accompanying drawings in the embodiments of the present invention. Apparently, the described embodiments are some of the embodiments of the present invention rather than all of the embodiments. All other embodiments obtained by a person of ordinary skill in the art based on the embodiments of the present invention without creative efforts shall fall within the protection scope of the present invention.

In the embodiments of the present invention, terms such as "exemplary" or "for example" are used for representing an example, an illustration, or an explanation. In the embodiments of the present invention, any embodiment or design solution described as "exemplary" or "for example" should not be construed as more exemplary or having an advantage over other embodiments or design solutions. To be exact, use of the terms such as "exemplary" or "for example" is intended to present related concepts in a specific manner.

A first electronic device or a third electronic device provided in the embodiments of the present invention is a terminal. The terminal may be a mobile phone, a tablet computer, a notebook computer, an ultra-mobile personal computer (Ultra-Mobile Personal Computer, UMPC), a netbook, a wearable device (Wearable Device), an in-vehicle device, a personal digital assistant (Personal Digital Assistant, PDA), or the like.

A second electronic device, a fourth electronic device, or a fifth electronic device provided in the embodiments of the present invention may be another terminal or may be a network-side device. The another terminal may be a mobile phone, a tablet computer, a notebook computer, an ultra-mobile personal computer (Ultra-Mobile Personal Computer, UMPC), a netbook, a wearable device (Wearable Device), an in-vehicle device, a personal digital assistant (Personal Digital Assistant, PDA), or the like. The network-side device may be a base station. The base station may be a base station that is generally used, an evolved node base station (evolved node base station, eNB), a network-side device (for example, a next generation node base station (next generation node base station, gNB)) in a 5G system, a transmission and reception point (Transmission and Reception Point, TRP), or a device such as a cell. It should be noted that, specific types of the terminal and the network-side device are not limited in the embodiments of the present invention.

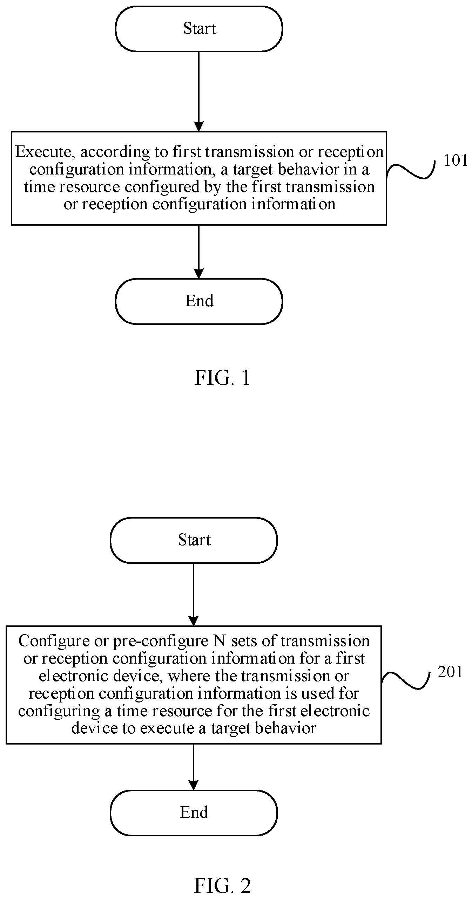

As shown in FIG. 1, an embodiment of the present invention provides a transmission or reception configuration method, applied to a third electronic device, the method including:
step 101: execute, according to first transmission or reception configuration information, a target behavior in a time resource configured by the first transmission or reception configuration information, where
the first transmission or reception configuration information is at least one set of transmission or reception configuration information in N sets of transmission or reception configuration information; and N is an integer greater than or equal to 1.

In an optional embodiment, the target behavior includes at least one of the following:
sidelink resource sensing (Sensing), for example, measuring reference signal received power RSRP or receiving sidelink control information SCI;
sidelink resource selection;
sidelink resource reselection;
sidelink object transmission;
sidelink object reception; and
sidelink object transmission and reception.

In a case that the target behavior is sidelink objection reception (which may also be referred to as that transmission or reception configuration information is used for configuring sidelink object reception), the transmission or reception configuration information includes: sidelink discontinuous reception DRX configuration information.

In another optional embodiment, the sidelink object includes at least one of the following:
sidelink control information SCI;
a physical sidelink control channel (Physical Sidelink Control Channel, PSCCH);
a physical sidelink shared channel (Physical Sidelink Shared Channel, PSSCH);
a physical sidelink feedback channel (Physical Sidelink Feedback Channel, PSFCH);
hybrid automatic repeat request-acknowledgement (Hybrid Automatic Repeat request-ACKnowledgement, HARQ-ACK) information;
a sidelink channel state information reference signal (Channel State Information Reference Signal, CSI-RS); and
a sidelink phase tracking reference signal (Phase Tracking Reference Signal, PT-RS).

It should be noted that, the N sets of transmission or reception configuration information mentioned in this embodiment of the present invention may be configured, pre-configured, or determined in a pre-agreed manner through a second electronic device (a network or another terminal).

Optionally, in the foregoing embodiments of the present invention, one piece of target information corresponds to at least one set of transmission or reception configuration information. Optionally, different target information corresponds to different transmission or reception configuration information.

The first electronic device includes at least one piece of the following target information.
a) A sidelink signal transmission or reception direction (the signal transmission or reception direction includes: reception, transmission, reception and transmission), for example, transmission or reception configuration information 1 controls a transmission state of the first electronic device; transmission or reception configuration information 2 controls a reception state of the first electronic device; and transmission or reception configuration information 3 controls a transmission and reception state of the first electronic device.
b) A sidelink resource scheduling mode, the resource scheduling mode includes: a mode 1 and a mode 2, and the mode 2 can be further classified as a mode 2a, a mode 2b, a mode 2c, and a mode 2d. The first electronic device in different resource scheduling modes is configured with different transmission or reception configuration information, which facilitates the resource scheduling modes to better coexist.

The mode 1 is that: a base station configures or schedules sidelink resources for a terminal to perform sidelink transmission; and the mode 2 is that: a terminal determines resources used for sidelink transmission from sidelink resources configured or sidelink resources pre-configured by a base station. Specifically, the mode 2a is that: the terminal independently selects sidelink resources used for sidelink transmission; the mode 2b is that: the terminal assists another terminal in selecting sidelink resources used for transmission; the mode 2c is that: the terminal configures sidelink transmission through NR configured grant (configured grant); and the mode 2d is that: the terminal schedules sidelink transmission of another terminal.

For example, the mode 1 corresponds to the transmission or reception configuration information 1, and the mode 2 corresponds to the transmission or reception configuration information 2; or the mode 1 corresponds to the transmission or reception configuration information 1 and the transmission or reception configuration information 2, and the mode 2 corresponds to the transmission or reception configuration information 3 and transmission or reception configuration information 4, and terminals in the same mode are further classified according to communication features.

In another example, the mode 1 and the mode 2 correspond to the transmission or reception configuration information 1 when the terminal works in the mode 1 and the mode 2 simultaneously, and the mode 2 corresponds to the transmission or reception configuration information 2 when the terminal works in the mode 2 independently.

c) Sidelink synchronization-related information.

d) Sidelink ID-related information.

e) An electronic device type, the electronic device type includes: pedestrian UE (Pedestrian UE, PUE), vehicle UE (Vehicle UE, VUE), scheduling UE, and scheduled UE.

For example, the PUE has a relatively weak capability, so that the PUE only performs reception and does not perform transmission, which corresponds to the transmission or reception configuration information 1; the VUE has a relatively strong capability, so that the VUE performs both reception and transmission, which corresponds to the transmission or reception configuration information 2; or the scheduling UE corresponds to the transmission or reception configuration information 3, and the scheduled UE corresponds to the transmission or reception configuration information 4.

f) A sidelink transmission or reception mode, the transmission or reception mode includes at least one of broadcast, multicast, and unicast. For example, different transmission or reception modes correspond to different transmission or reception configuration information.

g) A sidelink resource pool, for example, different resource pools correspond to different transmission or reception configuration information.

h) A sidelink bandwidth part (Bandwidth Part, BWP), for example, different BWPs correspond to different transmission or reception configuration information.

i) A carrier supporting sidelink, for example, different carriers correspond to different transmission or reception configuration information.

j) A sidelink feedback mechanism.

k) A sidelink channel state information reference signal CSI-RS. It is assumed that when the transmission or reception configuration information limits reception and/or transmission of CSI-RSs, different CSI-RSs correspond to different transmission or reception configuration information. For example, at least two of a periodic CSI-RS, a semi-persistent CSI-RS, and a non-periodic CSI-RS may correspond to different transmission or reception configuration information.

In another example, because CSI-RSs need to be transmitted with the physical sidelink control channel (PSCCH) and the physical sidelink shared channel (PSSCH) together, transmission opportunities of the CSI-RSs may be different due to different PSCCH or PSSCH time domain configurations and/or different physical sidelink feedback channel (PSFCH) periods, so that the CSI-RSs may correspond to different transmission or reception configuration information.

1) Sidelink search space (Search Space). Optionally, the search space is search space used for monitoring and scheduling sidelink downlink control information. For example, different search space IDs correspond to different transmission or reception configuration information.

m) A format of sidelink downlink control information DCI. Optionally, the DCI is DCI of NR for scheduling an LTE sidelink, and transmission or reception configuration information corresponding to the DCI may need to be aligned with transmission or reception configuration information of the LTE sidelink or UL. For example, different DCI formats correspond to different transmission or reception configuration information.

n) A radio access technology RAT supported by sidelink. If the first electronic device supports an NR sidelink and an LTE sidelink or performs NR sidelink transmission and LTE sidelink transmission simultaneously, same transmission or reception configuration information or different transmission or reception configuration information is configured for the NR sidelink and the LTE sidelink.

For example, the RAT corresponds to the transmission or reception configuration information 1 when NR sidelink transmission is performed currently, and the RAT corresponds to the transmission or reception configuration information 2 when LTE sidelink transmission is performed.

In an optional embodiment, the sidelink synchronization-related information includes at least one of the following.
I) A synchronization resource. Different synchronization resources correspond to different transmission or reception configuration information. Optionally, each synchronization resource corresponds to one piece of or a plurality of pieces of transmission or reception configuration information. For example, a synchronization resource 1 corresponds to the transmission or reception configuration information 1; a synchronization resource 2 corresponds to the transmission or reception configuration information 2; and a synchronization resource 3 corresponds to the transmission or reception configuration information 3. In another example, the synchronization resource 1 corresponds to the transmission or reception configuration information 1 and the transmission or reception configuration information 2; the synchronization resource 2 corresponds to the transmission or reception configuration information 3 and the transmission or reception configuration information 4; and the synchronization resource 3 corresponds to transmission or reception configuration information 5 and transmission or reception configuration information 6.
II) A synchronization priority. Different synchronization priorities correspond to different transmission or reception configuration information. Optionally, each synchronization priority corresponds to one piece of or a plurality of pieces of transmission or reception configuration information. For example, a synchronization priority 1 corresponds to the transmission or reception configuration information 1; a synchronization priority 2 corresponds to the transmission or reception configuration information 2; and a synchronization priority 3 corresponds to the transmission or reception configuration information 3. In another example, the synchronization priority 1 corresponds to the transmission or reception configuration information 1 and the transmission or reception configuration information 2; the synchronization priority 2 corresponds to the transmission or reception configuration information 3 and the transmission or reception configuration information 4; and the synchronization priority 3 corresponds to the transmission or reception configuration information 5 and the transmission or reception configuration information 6.
III) A synchronization source type. Different synchronization source types correspond to different DRX configurations. For example, the synchronization source type includes a base station, the Global Navigation Satellite System GNSS, or a terminal. Optionally, each synchronization source type corresponds to one piece of or a plurality of pieces of transmission or reception configuration information. For example, a synchronization source type 1 corresponds to the transmission or reception configuration information 1; a synchronization source type 2 corresponds to the transmission or reception configuration information 2; and a synchronization source type 3 corresponds to the transmission or reception configuration information 3. In another example, the synchronization source type 1 corresponds to the transmission or reception configuration information 1 and the transmission or reception configuration information 2; the synchronization source type 2 corresponds to the transmission or reception configuration information 3 and the transmission or reception configuration information 4; and the synchronization source type 3 corresponds to the transmission or reception configuration information 5 and the transmission or reception configuration information 6.
IV) A priority synchronization source configuration. Different priority synchronization source configurations correspond to different transmission or reception configuration information. For example, the priority synchronization source configuration may be classified as a GNSS-based priority synchronization source configuration and a network-based priority synchronization source configuration, and the two configurations may correspond to different transmission or reception configuration information.

Optionally, each priority synchronization source configuration corresponds to one piece of or a plurality of pieces of transmission or reception configuration information. For example, a GNSS-based highest priority synchronization source configuration corresponds to the transmission or reception configuration information 1; and a network-based highest priority synchronization source configuration corresponds to the transmission or reception configuration information 2. In another example, the GNSS-based highest priority synchronization source configuration corresponds to the transmission or reception configuration information 1 and the transmission or reception configuration information 2, and the network-based highest priority synchronization source configuration corresponds to the transmission or reception configuration information 3 and the transmission or reception configuration information 4.

V) A current hop-count of the electronic device. Different hop counts correspond to different transmission or reception configuration information. For example, a UE that is directly synchronized with a base station may be considered as a first hop; and a UE that is synchronized with the UE directly synchronized with the base station may be considered as a second hop.

Optionally, each hop count corresponds to one piece of or a plurality of pieces of transmission or reception configuration information. For example, when the hop count is A, the hop count corresponds to the transmission or reception configuration information 1; when the hop count is B, the hop count corresponds to the transmission or reception configuration information 2; and when the hop count is C, the hop count corresponds to the transmission or reception configuration information 3. In another example, when the hop count is A, the hop count corresponds to the transmission or reception configuration information 1 and the transmission or reception configuration information 2; when the hop count is B, the hop count corresponds to the transmission or reception configuration information 3 and the transmission or reception configuration information 4; and when the hop count is C, the hop count corresponds to the transmission or reception configuration information 5 and the transmission or reception configuration information 6.

VI) A sidelink synchronization signal. Different sidelink synchronization signals correspond to different transmission or reception configuration information. Optionally, each sidelink synchronization signal corresponds to one piece of or a plurality of pieces of transmission or reception configuration information.

For example, a sidelink synchronization signal 1 corresponds to the transmission or reception configuration information 1; a sidelink synchronization signal 2 corresponds to the transmission or reception configuration information 2; and a sidelink synchronization signal 3 corresponds to the transmission or reception configuration information 3. In another example, the sidelink synchronization signal 1 corresponds to the transmission or reception configuration information 1 and the transmission or reception configuration information 2; the sidelink synchronization signal 2 corresponds to the transmission or reception configuration information 3 and the transmission or reception configuration information 4; and the sidelink synchronization signal 3 corresponds to the transmission or reception configuration information 5 and the transmission or reception configuration information 6.

VII) A sidelink synchronization signal group. Different sidelink synchronization signal groups correspond to different transmission or reception configuration information. Optionally, each sidelink synchronization signal group corresponds to one piece of or a plurality of pieces of transmission or reception configuration information.

VIII) A synchronization source coverage state, for example, out-of-coverage and in-coverage. For example, out-of-coverage and in-coverage correspond to different transmission or reception configuration information.

In the embodiments of the present invention, the first electronic device under different synchronization-related information can be configured with different transmission or reception configuration information. Because UEs having the same synchronization-related information are probably synchronized with each other and can communicate with each other. Therefore, by providing a plurality of pieces of same transmission or reception configuration information for the UEs, unnecessary signal monitoring and energy overheads can be reduced. In addition, the same configuration is provided, the UEs may still communicate with each other.

In another optional embodiment, the sidelink ID-related information includes at least one of the following:
a source ID (source ID), optionally, each source ID corresponds to one piece of or a plurality of pieces of transmission or reception configuration information;
a destination ID (destination ID), optionally, each destination ID corresponds to one piece of or a plurality of pieces of transmission or reception configuration information;
a connection ID (connection ID), for example, an ID of a PC5 RRC connection or a number of HARQ processes. Optionally, each connection ID corresponds to one piece of or a plurality of pieces of transmission or reception configuration information;
a service ID (service ID), optionally, each service ID corresponds to one or more DRX configurations;
a group ID (group ID) of a device group of the electronic device, optionally, each group ID corresponds to one piece of or a plurality of pieces of transmission or reception configuration information;
an index (for example, a member ID) of the electronic device in the device group. Optionally, each member ID corresponds to one piece of or a plurality of pieces of transmission or reception configuration information.

In still another optional embodiment, the sidelink feedback mechanism includes at least one of the following:
no automatic repeat request HARQ feedback mechanism, where the no HARQ feedback mechanism includes two cases: resources used for HARQ feedback are not configured and HARQ feedback is closed;
a first HARQ feedback mechanism (that is, a NACK only mechanism, where if the data is received but cannot be decoded, a NACK is fed back, and there is no feedback in other cases); and
a second HARQ feedback mechanism (that is, an ACK or NACK mechanism, where if the data is received but cannot be decoded or SCI is received but no data is received, a NACK is fed back, and if the data is received and correctly decoded, an ACK is fed back).

For example, when there is no HARQ feedback, the UE may not need to monitor the PSFCH, and when there is a HARQ feedback, the UE needs to monitor the PSFCH. For different HARQ feedback mechanisms, the numbers of PSFCHs monitored by the UE are also different. It is assumed that when reception and/or transmission of the PSFCH is limited by the transmission or reception configuration information, different feedback mechanisms may need to correspond to different transmission or reception configuration information. For example, at least two of a feedback mechanism without PSFCH resources, a feedback mechanism having PSFCH resources but not requiring a HARQ feedback, and a feedback mechanism having PSFCH resources and requiring a HARQ feedback may correspond to different transmission or reception configuration information.

In the embodiments of the present invention, the method further includes:
selecting, according to target information of the first electronic device and/or current time information of the first electronic device, at least one set of transmission or reception configuration information from the N sets of transmission or reception configuration information as the first transmission or reception configuration information.

Optionally, the method further includes: selecting, according to the target information of the first electronic device, transmission or reception configuration information corresponding to the target information from the N sets of transmission or reception configuration information as the first transmission or reception configuration information; and/or selecting, according to the time information, at least one set of transmission or reception configuration information as the first transmission or reception configuration information.

It is assumed that the current time information is a slot T, and an index i of corresponding transmission or reception configuration information is UE ID+M(i), when the time information is a slot (T+20), an index (i+1) of corresponding transmission or reception configuration information is UE ID+M(i+1), where M(i+1)=A×M(i)+B.

Optionally, at least one piece of default transmission or reception configuration information is included in the N sets of transmission or reception configuration information, and the first electronic device can use the default transmission or reception configuration information in some specific scenarios. For example, in a case that the first electronic device cannot determine matching transmission or reception configuration information according to the target information and/or the time information, the first electronic device uses the default transmission or reception configuration information to execute the target behavior.

Alternatively, in the embodiments of the present invention, the method further includes:
selecting at least one set of transmission or reception configuration information from the N sets of transmission or reception configuration information randomly as the first transmission or reception configuration information; or
receiving signaling indicating the first transmission or reception configuration information, where the signaling may be transmitted by a network-side device or may be transmitted by another terminal, which is not specifically limited herein.

With reference to content of the target information, the "selecting, according to the target information of the first electronic device, transmission or reception configuration information corresponding to the target information from the N sets of transmission or reception configuration information as the first transmission or reception configuration information" is described below through examples:

It is assumed that when the signal transmission or reception direction is transmission, the signal transmission or reception direction corresponds to the transmission or reception configuration information 1; and when the signal transmission or reception direction is reception, the signal transmission or reception direction corresponds to the transmission or reception configuration information 2. The first electronic device performs transmission in a resource configured by the transmission or reception configuration information 1 and performs reception in a resource configured by the transmission or reception configuration information 2.

It is assumed that, the resource scheduling mode 1 corresponds to the transmission or reception configuration information 1, and the mode 2 corresponds to the transmission or reception configuration information 2, the transmission or reception configuration information 1 is used when the first electronic device is in the mode 1, and the transmission or reception configuration information 2 is used when the first electronic device is in the mode 2.

It is assumed that the synchronization resource 1 corresponds to the transmission or reception configuration information 1 and the synchronization resource 2 corresponds to the transmission or reception configuration information 2, the transmission or reception configuration information 1 is used when the first electronic device selects the synchronization resource 1 for communication; and the transmission or reception configuration information 2 is used when the first electronic device selects the synchronization resource 2 for communication.

It is assumed that the transmission or reception configuration information 1 is configured for the synchronization priority 1, and the transmission or reception configuration information 2 is configured for the synchronization priority 2, the transmission or reception configuration information 1 is used when the synchronization priority of the first electronic device is 1, and the transmission or reception configuration information 2 is used when the synchronization priority of the first electronic device is 2.

It is assumed that the transmission or reception configuration information 1 is configured for the synchronization source type 1, and the transmission or reception configuration information 2 is configured for the synchronization source type 2, the transmission or reception configuration information 1 is used when the first electronic device is of the synchronization source type 1, and the transmission or reception configuration information 2 is used when the first electronic device is of the synchronization source type 2.

It is assumed that the transmission or reception configuration information 1 is configured when the hop count is A, and the transmission or reception configuration information 2 is configured when the hop count is B, the transmission or reception configuration information 1 is used when the hop count of the first electronic device is A, and the transmission or reception configuration information 2 is used when the hop count of the first electronic device is B.

It is assumed that the transmission or reception configuration information 1 is configured for the sidelink synchronization signal 1, and the transmission or reception configuration information 2 is configured for the sidelink synchronization signal 2, the transmission or reception configuration information 1 is used when the first electronic device is associated with the sidelink synchronization signal 1, and the transmission or reception configuration information 2 is used when the first electronic device is associated with the sidelink synchronization signal 2.

It is assumed that the first transmission or reception configuration information is determined according to the sidelink ID-related information. Optionally, an index of the transmission or reception configuration information is (UE ID mod N), or the index of the transmission or reception configuration information is (UE ID/N), or the index of the transmission or reception configuration information is a×UE ID+b. Optionally, the index of the transmission or reception configuration information is (source ID mod N), or the index of the transmission or reception configuration information is (source ID/N), or the index of the transmission or reception configuration information is a×source ID+b. Optionally, the index of the transmission or reception configuration information is (destination ID mod N), or the index of the transmission or reception configuration information is (destination ID/N), or the index of the transmission or reception configuration information is a×destination ID+b. Optionally, the index of the transmission or reception configuration information is (connection ID mod N), or the index of the transmission or reception configuration information is (connection ID/N), or the index of the transmission or reception configuration information is a×connection ID+b. Optionally, the index of the transmission or reception configuration information is (service ID mod N), or the index of the transmission or reception configuration information is (service ID/N), or the index of the transmission or reception configuration information is a×service ID+b. Optionally, the index of the transmission or reception configuration information is (member ID mod N), or the index of the transmission or reception configuration information is (member ID/N), or the index of the transmission or reception configuration information is a×member ID+b.

It is assumed that the transmission or reception configuration information is determined according to the electronic device type. The transmission or reception configuration information 1 is used when the first electronic device is PUE; the transmission or reception configuration information 2 is used when the first electronic device is VUE; the transmission or reception configuration information 3 is used when the first electronic device is scheduling UE; or the transmission or reception configuration information 4 is used when the first electronic device is scheduled UE.

It is assumed that the transmission or reception configuration information is determined according to the transmission or reception mode. The transmission or reception configuration information 1 is used when the first electronic device is in a broadcast transmission or reception mode; the transmission or reception configuration information 2 is used when the first electronic device is in a multicast transmission or reception mode; and the transmission or reception configuration information 3 is used when the first electronic device is in a unicast transmission or reception mode.

It is assumed that the transmission or reception configuration information is determined according to the resource pool type. The transmission or reception configuration information 1 is used when the resource pool type selected by the first electronic device is A; and the transmission or reception configuration information 2 is used when the resource pool type selected by the first electronic device is B.

It is assumed that the transmission or reception configuration information is determined according to the BWP. The transmission or reception configuration information 1 is used when the first electronic device is a BWP 1; and the transmission or reception configuration information 2 is used when the first electronic device is a BWP 2.

It is assumed that the transmission or reception configuration information is determined according to the carrier. The transmission or reception configuration information 1 is used when the carrier of the first electronic device is a carrier 1; and the transmission or reception configuration information 2 is used when the carrier of the first electronic device is a carrier 2.

It is assumed that the transmission or reception configuration information is determined according to the feedback mechanism. The transmission or reception configuration information 1 is used when the first electronic device uses no HARQ feedback mechanism; the transmission or reception configuration information 2 is used when the first electronic device uses a NACK only feedback mechanism; and the transmission or reception configuration information 3 is used when the first electronic device uses an ACK/NACK feedback mechanism.

It is assumed that the transmission or reception configuration information 1 is used when the CSI-RS is transmitted in a periodic manner; the transmission or reception configuration information 2 is used when the CSI-RS is transmitted in a semi-persistent manner; and the transmission or reception configuration information 3 is used when the CSI-RS is transmitted in a non-periodic manner. Alternatively, the transmission or reception configuration information 1 is used when the transmission opportunity of the CSI-RS is frequent, and the transmission or reception configuration information 2 is used when the transmission opportunity of the CSI-RS is sparse.

Continuing the foregoing examples, in the embodiments of the present invention, the method further includes:
receiving target signaling transmitted by a second electronic device, where the target signaling is used for indicating second transmission or reception configuration information in the N sets of transmission or reception configuration information. That is, a network-side device or another terminal dynamically indicates or controls the second transmission or reception configuration information through the target signaling.

Optionally, the target signaling carries an index of the second transmission or reception configuration information, or the target signaling carries a bitmap, and the second transmission or reception configuration information is indicated by the bitmap. For example, when a bit position is 1, it indicates that transmission or reception configuration information corresponding to the bit position is the second transmission or reception configuration information.

The target signaling may be downlink control information DCI, sidelink control information SCI, a media access control control element MAC CE, radio resource control RRC signaling, or other upper layer signaling.

In an optional embodiment, the target signaling includes at least one of the following signaling:
switching signaling, used for instructing the first electronic device to switch to the second transmission or reception configuration information;
activation or deactivation signaling, used for instructing the first electronic device to activate or deactivate the second transmission or reception configuration information, where specifically, the second transmission or reception configuration information may be temporarily activated or deactivated, or the second transmission or reception configuration information may be always effective after the second transmission or reception configuration information is activated or deactivated until the activation or deactivation signaling instructing to deactivate or activate the second transmission or reception configuration information is received next time; and the activation or deactivation signaling further carries an activation or deactivation instruction, for example, the instruction indicates activation when the instruction is 1, and the instruction indicates deactivation when the instruction is 0; and
sleeping or waking up signaling, used for instructing the first electronic device to enter a sleep or wakeup state and use the second transmission or reception configuration information in the wakeup state. The sleeping or wake up signaling carries a sleeping (sleeping) or wake up (wake up) instruction. For example, the instruction indicates waking up when the instruction is 1, and the instruction indicates sleeping when the instruction is 0.

Continuing the foregoing examples, in the embodiments of the present invention, the method further includes:
executing the target behavior in a time resource configured by the second transmission or reception configuration information. For example, in a case that the target signaling is switching signaling, in a case that the activation or deactivation signaling indicates activation, or in a case that the sleeping or waking up signaling indicates waking up, the target behavior is executed in the time resource configured by the second transmission or reception configuration information, that is, the target behavior is executed when the first transmission or reception configuration information is switched to the second transmission or reception configuration information.

Based on the above, in the embodiments of the present invention, through configuration of N sets of transmission or reception configuration information, the first electronic device flexibly selects matching first transmission or reception configuration information to perform communication, so that the sidelink communication requirements can be matched. After the first electronic device determines the first transmission or reception configuration information, the overheads for detecting control information can be reduced, thereby saving power.

As shown in FIG. 2, an embodiment of the present invention further provides a transmission or reception configuration method, applied to a second electronic device, the method including:
step 21: configure or pre-configure N sets of transmission or reception configuration information for a first electronic device, where the transmission or reception configuration information is used for configuring a time resource for the first electronic device to execute a target behavior; and N is an integer greater than or equal to 1.

In an optional embodiment, the target behavior includes at least one of the following:
sidelink resource sensing (Sensing), for example, measuring reference signal received power RSRP or receiving sidelink control information SCI;
sidelink resource selection;
sidelink resource reselection;
sidelink object transmission;
sidelink object reception; and
sidelink object transmission and reception.

In a case that the target behavior is sidelink objection reception (which may also be referred to as that transmission or reception configuration information is used for configuring sidelink object reception), the transmission or reception configuration information includes: sidelink discontinuous reception DRX configuration information.

In another optional embodiment, the sidelink object includes at least one of the following:
sidelink control information;
a physical sidelink control channel PSCCH;
a physical sidelink shared channel PSSCH;
a physical sidelink feedback channel PSFCH;
hybrid automatic repeat request-acknowledgement HARQ-ACK information;
a sidelink channel state information reference signal CSI-RS; and
a sidelink phase tracking reference signal PT-RS.

Optionally, in the foregoing embodiments of the present invention, one piece of target information corresponds to at least one set of transmission or reception configuration information. Optionally, different target information corresponds to different transmission or reception configuration information.

The first electronic device includes at least one piece of the following target information.
a) A sidelink signal transmission or reception direction (the signal transmission or reception direction includes: reception, transmission, reception and transmission). For example, transmission or reception configuration information 1 controls a transmission state of the first electronic device; transmission or reception configuration information 2 controls a reception state of the first electronic device; and transmission or reception configuration information 3 controls a transmission and reception state of the first electronic device.
b) A sidelink resource scheduling mode. The resource scheduling mode includes: a mode 1 and a mode 2, and the mode 2 can be further classified as a mode 2a, a mode 2b, a mode 2c, and a mode 2d. The first electronic device in different resource scheduling modes is configured with different transmission or reception configuration information, which facilitates the resource scheduling modes to better coexist.

The mode 1 is that: a base station configures or schedules sidelink resources for a terminal to perform sidelink transmission; and the mode 2 is that: a terminal determines resources used for sidelink transmission from sidelink resources configured or sidelink resources pre-configured by a base station. Specifically, the mode 2a is that: the terminal independently selects sidelink resources used for sidelink transmission; the mode 2b is that: the terminal assists another terminal in selecting sidelink resources used for transmission; the mode 2c is that: the terminal configures sidelink transmission through NR configured grant (configured grant); and the mode 2d is that: the terminal schedules sidelink transmission of another terminal.

For example, the mode 1 corresponds to the transmission or reception configuration information 1, and the mode 2 corresponds to the transmission or reception configuration information 2; or the mode 1 corresponds to the transmission or reception configuration information 1 and the transmission or reception configuration information 2, and the mode 2 corresponds to the transmission or reception configuration information 3 and transmission or reception configuration information 4. Terminals in the same mode are further classified according to communication features.

In another example, the mode 1 and the mode 2 correspond to the transmission or reception configuration information 1 when the terminal works in the mode 1 and the mode 2 simultaneously, and the mode 2 corresponds to the transmission or reception configuration information 2 when the terminal works in the mode 2 independently.

c) Sidelink synchronization-related information.

d) Sidelink ID-related information.

e) An electronic device type. The electronic device type includes: pedestrian UE (Pedestrian UE, PUE), vehicle UE (Vehicle UE, VUE), scheduling UE, and scheduled UE.

For example, the PUE has a relatively weak capability, so that the PUE only performs reception and does not perform transmission, which corresponds to the transmission or reception configuration information 1; the VUE has a relatively strong capability, so that the VUE performs both reception and transmission, which corresponds to the transmission or reception configuration information 2; or the scheduling UE corresponds to the transmission or reception configuration information 3, and the scheduled UE corresponds to the transmission or reception configuration information 4.

f) A sidelink transmission or reception mode. The transmission or reception mode includes at least one of broadcast, multicast, and unicast. For example, different transmission or reception modes correspond to different transmission or reception configuration information.

g) A sidelink resource pool. For example, different resource pools correspond to different transmission or reception configuration information.

h) A sidelink bandwidth part BWP. For example, different BWPs correspond to different transmission or reception configuration information.

i) A carrier supporting sidelink. For example, different carriers correspond to different transmission or reception configuration information.

j) A sidelink feedback mechanism.

k) A sidelink channel state information reference signal CSI-RS. It is assumed that when the transmission or reception configuration information limits reception and/or transmission of CSI-RSs, different CSI-RSs correspond to different transmission or reception configuration information. For example, at least two of a periodic CSI-RS, a semi-persistent CSI-RS, and a non-periodic CSI-RS may correspond to different transmission or reception configuration information.

In another example, because CSI-RSs need to be transmitted with the physical sidelink control channel (PSCCH) and the physical sidelink shared channel (PSSCH) together, transmission opportunities of the CSI-RSs may be different due to different PSCCH or PSSCH time domain configurations and/or different physical sidelink feedback channel (PSFCH) periods, so that the CSI-RSs may correspond to different transmission or reception configuration information.

1) Sidelink search space (Search space). Optionally, the search space is search space used for monitoring and scheduling sidelink downlink control information. For example, different search space IDs correspond to different transmission or reception configuration information.

m) A format of sidelink downlink control information DCI. Optionally, the DCI is DCI of NR for scheduling an LTE sidelink, and transmission or reception configuration information corresponding to the DCI may need to be aligned with transmission or reception configuration information of the LTE sidelink or UL. For example, different DCI formats correspond to different transmission or reception configuration information.

n) A radio access technology RAT supported by sidelink. If the first electronic device supports an NR sidelink and an LTE sidelink or performs NR sidelink transmission and LTE sidelink transmission simultaneously, same transmission or reception configuration information or different transmission or reception configuration information is configured for the NR sidelink and the LTE sidelink.

For example, the RAT corresponds to the transmission or reception configuration information 1 when NR sidelink transmission is performed currently, and the RAT corresponds to the transmission or reception configuration information 2 when LTE sidelink transmission is performed.

In an optional embodiment, the sidelink synchronization-related information includes at least one of the following:
I) A synchronization resource. Different synchronization resources correspond to different transmission or reception configuration information. Optionally, each synchronization resource corresponds to one piece of or a plurality of pieces of transmission or reception configuration information. For example, a synchronization resource 1 corresponds to the transmission or reception configuration information 1; a synchronization resource 2 corresponds to the transmission or reception configuration information 2; and a synchronization resource 3 corresponds to the transmission or reception configuration information 3. In another example, the synchronization resource 1 corresponds to the transmission or reception configuration information 1 and the transmission or reception configuration information 2; the synchronization resource 2 corresponds to the transmission or reception configuration information 3 and the transmission or reception configuration information 4; and the synchronization resource 3 corresponds to transmission or reception configuration information 5 and transmission or reception configuration information 6.
II) A synchronization priority. Different synchronization priorities correspond to different transmission or reception configuration information. Optionally, each synchronization priority corresponds to one piece of or a plurality of pieces of transmission or reception configuration information. For example, a synchronization priority 1 corresponds to the transmission or reception configuration information 1; a synchronization priority 2 corresponds to the transmission or reception configuration information 2; and a synchronization priority 3 corresponds to the transmission or reception configuration information 3. In another example, the synchronization priority 1 corresponds to the transmission or reception configuration information 1 and the transmission or reception configuration information 2; the synchronization priority 2 corresponds to the transmission or reception configuration information 3 and the transmission or reception configuration information 4; and the synchronization priority 3 corresponds to the transmission or reception configuration information 5 and the transmission or reception configuration information 6.
III) A synchronization source type. Different synchronization source types correspond to different DRX configurations. For example, the synchronization source type includes a base station, the Global Navigation Satellite System GNSS, or a terminal. Optionally, each synchronization source type corresponds to one piece of or a plurality of pieces of transmission or reception configuration information. For example, a synchronization source type 1 corresponds to the transmission or reception configuration information 1; a synchronization source type 2 corresponds to the transmission or reception configuration information 2; and a synchronization source type 3 corresponds to the transmission or reception configuration information 3. In another example, the synchronization source type 1 corresponds to the transmission or reception configuration information 1 and the transmission or reception configuration information 2; the synchronization source type 2 corresponds to the transmission or reception configuration information 3 and the transmission or reception configuration information 4; and the synchronization source type 3 corresponds to the transmission or reception configuration information 5 and the transmission or reception configuration information 6.
IV) A priority synchronization source configuration. Different priority synchronization source configurations correspond to different transmission or reception configuration information. For example, the priority synchronization source configuration may be classified as a GNSS-based priority synchronization source configuration and a network-based priority synchronization source configuration, and the two configurations may correspond to different transmission or reception configuration information.

Optionally, each priority synchronization source configuration corresponds to one piece of or a plurality of pieces of transmission or reception configuration information. For example, a GNSS-based highest priority synchronization source configuration corresponds to the transmission or reception configuration information 1; and a network-based highest priority synchronization source configuration corresponds to the transmission or reception configuration information 2. In another example, the GNSS-based highest priority synchronization source configuration corresponds to the transmission or reception configuration information 1 and the transmission or reception configuration information 2, and the network-based highest priority synchronization source configuration corresponds to the transmission or reception configuration information 3 and the transmission or reception configuration information 4.

V) A current hop-count of the electronic device. Different hop counts correspond to different transmission or reception configuration information. For example, a UE that is directly synchronized with a base station may be considered as a first hop; and a UE that is synchronized with the UE directly synchronized with the base station may be considered as a second hop.

Optionally, each hop count corresponds to one piece of or a plurality of pieces of transmission or reception configuration information. For example, when the hop count is A, the hop count corresponds to the transmission or reception configuration information 1; when the hop count is B, the hop count corresponds to the transmission or reception configuration information 2; and when the hop count is C, the hop count corresponds to the transmission or reception configuration information 3. In another example, when the hop count is A, the hop count corresponds to the transmission or reception configuration information 1 and the transmission or reception configuration information 2; when the hop count is B, the hop count corresponds to the transmission or reception configuration information 3 and the transmission or reception configuration information 4; and when the hop count is C, the hop count corresponds to the transmission or reception configuration information 5 and the transmission or reception configuration information 6.

VI) A sidelink synchronization signal. Different sidelink synchronization signals correspond to different transmission or reception configuration information. Optionally, each sidelink synchronization signal corresponds to one piece of or a plurality of pieces of transmission or reception configuration information.

For example, a sidelink synchronization signal 1 corresponds to the transmission or reception configuration information 1; a sidelink synchronization signal 2 corresponds to the transmission or reception configuration information 2; and a sidelink synchronization signal 3 corresponds to the transmission or reception configuration information 3. In another example, the sidelink synchronization signal 1 corresponds to the transmission or reception configuration information 1 and the transmission or reception configuration information 2; the sidelink synchronization signal 2 corresponds to the transmission or reception configuration information 3 and the transmission or reception configuration information 4; and the sidelink synchronization signal 3 corresponds to the transmission or reception configuration information 5 and the transmission or reception configuration information 6.

VII) A sidelink synchronization signal group. Different sidelink synchronization signal groups correspond to different transmission or reception configuration information. Optionally, each sidelink synchronization signal group corresponds to one piece of or a plurality of pieces of transmission or reception configuration information.

VIII) A synchronization source coverage state, for example, out-of-coverage and in-coverage. For example, out-of-coverage and in-coverage correspond to different transmission or reception configuration information.

In the embodiments of the present invention, the first electronic device under different synchronization-related information can be configured with different transmission or reception configuration information. Because UEs having the same synchronization-related information are probably synchronized with each other and can communicate with each other. Therefore, by providing a plurality of pieces of same transmission or reception configuration information for the UEs, unnecessary signal monitoring and energy overheads can be reduced. In addition, the same configuration is provided, the UEs may still communicate with each other.

In another optional embodiment, the sidelink ID-related information includes at least one of the following:
a source ID (source ID), optionally, each source ID corresponds to one piece of or a plurality of pieces of transmission or reception configuration information;
a destination ID (destination ID), optionally, each destination ID corresponds to one piece of or a plurality of pieces of transmission or reception configuration information;
a connection ID (connection ID), for example, an ID of a PC5 RRC connection or a number of HARQ processes. Optionally, each connection ID corresponds to one piece of or a plurality of pieces of transmission or reception configuration information;
a service ID (service ID), optionally, each service ID corresponds to one or more DRX configurations;
a group ID (group ID) of a device group of the electronic device, optionally, each group ID corresponds to one piece of or a plurality of pieces of transmission or reception configuration information;
an index (for example, a member ID) of the electronic device in the device group, optionally, each member ID corresponds to one piece of or a plurality of pieces of transmission or reception configuration information.

In still another optional embodiment, the sidelink feedback mechanism includes at least one of the following:
no automatic repeat request HARQ feedback mechanism, where the no HARQ feedback mechanism includes two cases: resources used for HARQ feedback are not configured and HARQ feedback is closed;
a first HARQ feedback mechanism (that is, a NACK only mechanism, where if the data is received but cannot be decoded, a NACK is fed back, and there is no feedback in other cases); and
a second HARQ feedback mechanism (that is, an ACK or NACK mechanism, where if the data is received but cannot be decoded or SCI is received but no data is received, a NACK is fed back, and if the data is received and correctly decoded, an ACK is fed back).

For example, when there is no HARQ feedback, the UE may not need to monitor the PSFCH, and when there is a HARQ feedback, the UE needs to monitor the PSFCH. For different HARQ feedback mechanisms, the numbers of PSFCHs monitored by the UE are also different. It is assumed that when reception and/or transmission of the PSFCH is limited by the transmission or reception configuration information, different feedback mechanisms may need to correspond to different transmission or reception configuration information. For example, at least two of a feedback mechanism without PSFCH resources, a feedback mechanism having PSFCH resources but not requiring a HARQ feedback, and a feedback mechanism having PSFCH resources and requiring a HARQ feedback may correspond to different transmission or reception configuration information.

Optionally, in the embodiments of the present invention, the method further includes:
transmitting target signaling to the first electronic device, where the target signaling is used for indicating second transmission or reception configuration information in the N sets of transmission or reception configuration information. That is, a network-side device or another terminal dynamically indicates or controls the second transmission or reception configuration information through the target signaling.

Optionally, the target signaling carries an index of the second transmission or reception configuration information, or the target signaling carries a bitmap, and the second transmission or reception configuration information is indicated by the bitmap. For example, when a bit position is 1, it indicates that transmission or reception configuration information corresponding to the bit position is the second transmission or reception configuration information.

The target signaling may be downlink control information DCI, sidelink control information SCI, a media access control control element MAC CE, radio resource control RRC signaling, or other upper layer signaling.

In an optional embodiment, the target signaling includes at least one of the following signaling:
switching signaling, used for instructing the first electronic device to switch to the second transmission or reception configuration information indicated by the switching signaling;
activation or deactivation signaling, used for instructing the first electronic device to activate or deactivate the second transmission or reception configuration information indicated by the activation or deactivation signaling, where specifically, the second transmission or reception configuration information may be temporarily activated or deactivated, or the second transmission or reception configuration information may be always effective after the second transmission or reception configuration information is activated or deactivated until the activation or deactivation signaling instructing to deactivate or activate the second transmission or reception configuration information is received next time; and the activation or deactivation signaling further carries an activation or deactivation instruction, for example, the instruction indicates activation when the instruction is 1, and the instruction indicates deactivation when the instruction is 0; and
sleeping or waking up signaling, used for instructing the first electronic device to enter a sleep or wakeup state and use the second transmission or reception configuration information in the wakeup state. The sleeping or wake up signaling carries a sleeping (sleeping) or wake up (wake up) instruction. For example, the instruction indicates waking up when the instruction is 1, and the instruction indicates sleeping when the instruction is 0.

Based on the above, in the embodiments of the present invention, through configuration of N sets of transmission or reception configuration information, the first electronic device flexibly selects matching first transmission or reception configuration information to perform communication, so that the sidelink communication requirements can be matched. After the first electronic device determines the first transmission or reception configuration information, the overheads for detecting control information can be reduced, thereby saving power.

To describe the transmission or reception configuration method provided in the embodiments of the present invention more clearly, the method is described below with reference to some examples.

### Example 1

A network configures one piece of or a plurality of pieces of transmission or reception configuration information for two synchronization resources respectively.

It is assumed that a synchronization resource 1 corresponds to transmission or reception configuration information 1 and a synchronization resource 2 corresponds to transmission or reception configuration information 2. A terminal 1 selects the transmission or reception configuration information 1 based on an ID thereof and current time information; and a terminal 2 selects the transmission or reception configuration information 2 based on an ID thereof and current time information.

It is assumed that the synchronization resource 1 corresponds to the transmission or reception configuration information 1 the transmission or reception configuration information 2 and the synchronization resource 2 corresponds to transmission or reception configuration information 3 and transmission or reception configuration information 4. The terminal 1 selects the transmission or reception configuration information 2 based on the ID thereof and the current time information, and the terminal 2 selects the transmission or reception configuration information 4 based on the ID thereof and the current time information.

In this case, transmission or reception configurations of the terminal 1 and the terminal 2 are different, and the terminal 1 and the terminal 2 can perform resource reception, resource transmission, or resource reception and transmission in resources of the respective transmission or reception configurations and can communicate with each other.

### Example 2

A network configures one piece of transmission or reception configuration information for two synchronization resources respectively.

It is assumed that a synchronization resource 1 corresponds to transmission or reception configuration information 1 and a synchronization resource 2 corresponds to transmission or reception configuration information 2. The transmission or reception configuration information 1 is selected when a terminal 1 selects the synchronization resource 1 for communication; and the transmission or reception configuration information 2 is selected when a terminal 2 selects the synchronization resource 2 for communication.

In this case, transmission or reception configurations of the terminal 1 and the terminal 2 are different, and the terminal 1 and the terminal 2 can perform resource reception, resource transmission, or resource reception and transmission in resources of the respective transmission or reception configurations and can communicate with each other.

### Example 3

A network configures one piece of transmission or reception configuration information for two synchronization resources respectively.

It is assumed that a synchronization resource 1 corresponds to transmission or reception configuration information 1 and a synchronization resource 2 corresponds to transmission or reception configuration information 2. The transmission or reception configuration information 1 is selected when a terminal 1 selects the synchronization resource 1 for communication; and the transmission or reception configuration information 2 is selected when a terminal 1 selects the synchronization resource 1 for communication.

In this case, transmission or reception configurations of the terminal 1 and the terminal 2 are the same, and the terminal 1 and the terminal 2 can perform resource reception, resource transmission, or resource reception and transmission in a resource of the transmission or reception configuration information 1 (that is, the same resource) and can communicate with each other.

### Example 4

A network configures one piece of transmission or reception configuration information for three synchronization resources respectively.

It is assumed that a synchronization resource 1 corresponds to transmission or reception configuration information 1, a synchronization resource 2 corresponds to transmission or reception configuration information 2, and a synchronization resource 3 corresponds to transmission or reception configuration information 3.

The transmission or reception configuration information 1 is selected when a terminal 1 selects the synchronization resource 1 for communication; and the transmission or reception configuration information 2 is selected when a terminal 2 selects the synchronization resource 2 for communication. In this case, transmission or reception configurations of the terminal 1 and the terminal 2 are different, and the terminal 1 and the terminal 2 can perform resource reception, resource transmission, or resource reception and transmission in resources of the respective transmission or reception configurations and can communicate with each other. At a moment, the terminal 1 receives MAC CE switching signaling indication to switch target transmission or reception configuration information to the transmission or reception configuration information 3, the terminal 1 switches from the original transmission or reception configuration information 1 to the transmission or reception configuration information 3. In this case, transmission or reception configurations of the terminal 1 and the terminal 2 are different, and the terminal 1 and the terminal 2 can perform resource reception, resource transmission, or resource reception and transmission in resources of the respective transmission or reception configurations and can communicate with each other.

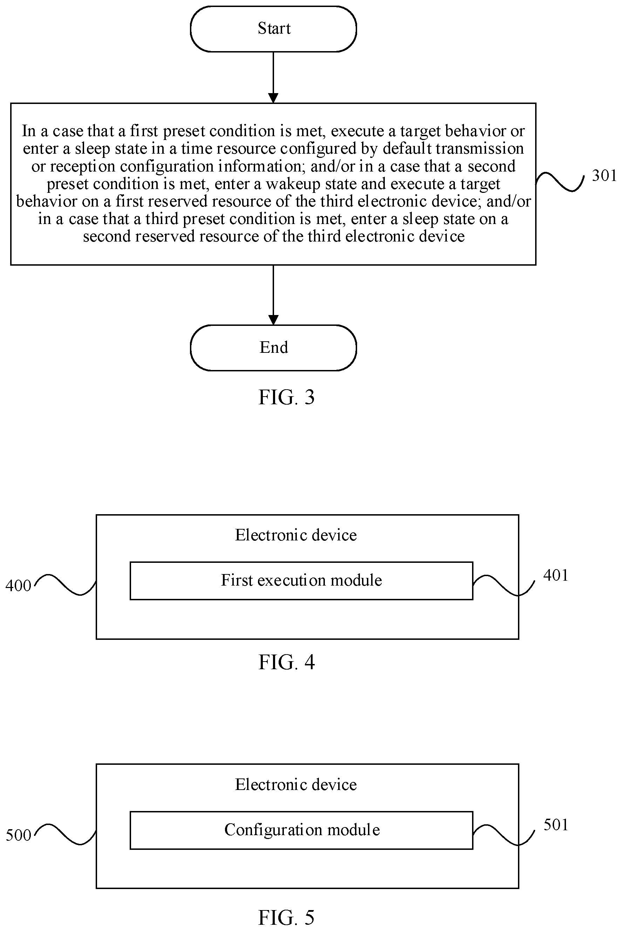

As shown in FIG. 3, an embodiment of the present invention further provides a transmission or reception configuration method, applied to a third electronic device, the method including:
step 301: in a case that a first preset condition is met, execute a target behavior or enter a sleep state in a time resource configured by default transmission or reception configuration information; and/or
in a case that a second preset condition is met, enter a wakeup state and execute a target behavior on a first reserved resource (Reserved resources) of the third electronic device; and/or
in a case that a third preset condition is met, enter a sleep state on a second reserved resource of the third electronic device.

In other words, in the embodiments of the present invention, the electronic device determines the transmission or reception configuration information or enters a wakeup state or a sleep state through a preset condition mechanism, so that the overheads for detecting control information can be reduced, thereby saving power.

Optionally, in the embodiments of the present invention, the target behavior includes at least one of the following:
sidelink resource sensing;
sidelink resource selection;
sidelink resource reselection;
sidelink object transmission;
sidelink object reception; and
sidelink object transmission and reception.

The sidelink object includes at least one of the following:
sidelink control information;
a physical sidelink control channel PSCCH;
a physical sidelink shared channel PSSCH;
a physical sidelink feedback channel PSFCH;
hybrid automatic repeat request-acknowledgement HARQ-ACK information;
a sidelink channel state information reference signal CSI-RS; and
a sidelink phase tracking reference signal PT-RS.

In an optional embodiment of the present invention, the first preset condition includes at least one of the following:
a number of times that the third electronic device fails to transmit a sidelink object is greater than or equal to a first threshold;
a number of times that the third electronic device fails to receive a sidelink object is greater than or equal to a second threshold;
a number of times that the third electronic device receives a negative acknowledgement NACK feedback is greater than or equal to a third threshold; and
a number of times that the third electronic device does not receive a feedback (for example, a number of times of discontinuous transmission DTX) is greater than or equal to a fourth threshold.

It should be noted that, specific values of the first threshold, the second threshold, the third threshold, and/or the fourth threshold may be determined according to data of an actual application, which are not specifically limited herein.

In another optional embodiment of the present invention, the method further includes:
obtaining the first reserved resource and/or the second reserved resource of the third electronic device in a target manner, where the target manner includes at least one of the following:
configuration by a fourth electronic device;
pre-configuration;
indication by a fifth electronic device through sidelink control information SCI; and
pre-agreement.

For example, when the SCI indicates a periodic first reserved resource, the terminal can be woken up and perform monitoring on the first reserved resource.

Based on the above, in the embodiments of the present invention, the electronic device determines the transmission or reception configuration information or enters a wakeup state or a sleep state through a preset condition mechanism, so that the overheads for detecting control information can be reduced, thereby saving power.

As shown in FIG. 4, an embodiment of the present invention further provides an electronic device 400, the electronic device being a first electronic device and including:
a first execution module 401, configured to execute, according to first transmission or reception configuration information, a target behavior in a time resource configured by the first transmission or reception configuration information, where
the first transmission or reception configuration information is at least one set of transmission or reception configuration information in N sets of transmission or reception configuration information; and N is an integer greater than or equal to 1.

Optionally, in the embodiments of the present invention, the transmission or reception configuration information includes: sidelink discontinuous reception DRX configuration information.

Optionally, in the embodiments of the present invention, the target behavior includes at least one of the following:
sidelink resource sensing;
sidelink resource selection;
sidelink resource reselection;
sidelink object transmission;
sidelink object reception; and
sidelink object transmission and reception.

Optionally, in the embodiments of the present invention, the sidelink object includes at least one of the following:
sidelink control information;
a physical sidelink control channel PSCCH;
a physical sidelink shared channel PSSCH;
a physical sidelink feedback channel PSFCH;
hybrid automatic repeat request-acknowledgement HARQ-ACK information;
a sidelink channel state information reference signal CSI-RS; and
a sidelink phase tracking reference signal PT-RS.

Optionally, in the foregoing embodiments of the present invention, one piece of target information corresponds to at least one set of transmission or reception configuration information.

The first electronic device includes at least one piece of the following target information:
a sidelink signal transmission or reception direction;
a sidelink resource scheduling mode;
sidelink synchronization-related information;
sidelink ID-related information;
an electronic device type;
a sidelink transmission or reception mode;
a sidelink resource pool;
a sidelink bandwidth part BWP;
a carrier supporting sidelink;
a sidelink feedback mechanism;
a sidelink channel state information reference signal;
sidelink search space;
a format of sidelink downlink control information DCI; or
a radio access technology supported by sidelink.

Optionally, in the embodiments of the present invention, the sidelink synchronization-related information includes at least one of the following:
a synchronization resource;
a synchronization priority;
a synchronization source type;
a priority synchronization source configuration;
a current hop-count of the electronic device;
a sidelink synchronization signal;
a sidelink synchronization signal group; and
a synchronization source coverage state.

Optionally, in the embodiments of the present invention, the sidelink ID-related information includes at least one of the following:
a source ID;
a destination ID;
a connection ID;
a service ID;
a group ID of a device group of the electronic device; and
an index of the electronic device in the device group.

Optionally, in the embodiments of the present invention, the sidelink feedback mechanism includes at least one of the following:
no automatic repeat request HARQ feedback mechanism;
a first HARQ feedback mechanism; and
a second HARQ feedback mechanism.

Optionally, in the embodiments of the present invention, the electronic device further includes:
an information determining module, configured to: select, according to target information of the first electronic device and/or current time information of the first electronic device, at least one set of transmission or reception configuration information from the N sets of transmission or reception configuration information as the first transmission or reception configuration information; or
select at least one set of transmission or reception configuration information from the N sets of transmission or reception configuration information randomly as the first transmission or reception configuration information; or
receive signaling indicating the first transmission or reception configuration information.

Optionally, in the embodiments of the present invention, the electronic device further includes:
a signaling receiving module, configured to receive target signaling transmitted by a second electronic device, where the target signaling is used for indicating second transmission or reception configuration information in the N sets of transmission or reception configuration information.

Optionally, in the embodiments of the present invention, the target signaling carries a bitmap, and the second transmission or reception configuration information is indicated by the bitmap.

Optionally, in the embodiments of the present invention, the target signaling includes at least one of the following signaling:
switching signaling, used for instructing the first electronic device to switch to the second transmission or reception configuration information;
activation or deactivation signaling, used for instructing the first electronic device to activate or deactivate the second transmission or reception configuration information; and
sleeping or waking up signaling, used for instructing the first electronic device to enter a sleep or wakeup state and use the second transmission or reception configuration information in the wakeup state.

Optionally, in the embodiments of the present invention, the electronic device further includes:
a third execution module, configured to execute the target behavior in a time resource configured by the second transmission or reception configuration information.

In the embodiments of the present invention, through configuration of N sets of transmission or reception configuration information, the first electronic device flexibly selects matching first transmission or reception configuration information to perform communication, so that the sidelink communication requirements can be matched. After the first electronic device determines the first transmission or reception configuration information, the overheads for detecting control information can be reduced, thereby saving power.

It should be noted that, the electronic device according to the embodiments of the present invention is an electronic device that can perform the foregoing transmission or reception configuration methods, all embodiments of the foregoing transmission or reception configuration methods are applicable to the electronic device, and same or similar beneficial effects can all be achieved.

As shown in FIG. 5, an embodiment of the present invention further provides an electronic device 500, the electronic device being a second electronic device and including:
a configuration module 501, configured to configure or pre-configure N sets of transmission or reception configuration information for a first electronic device, where the transmission or reception configuration information is used for configuring a time resource for the first electronic device to execute a target behavior; and N is an integer greater than or equal to 1.

Optionally, in the embodiments of the present invention, the transmission or reception configuration information includes: sidelink discontinuous reception DRX configuration information.

Optionally, in the embodiments of the present invention, the target behavior includes at least one of the following:
sidelink resource sensing;
sidelink resource selection;
sidelink resource reselection;
sidelink object transmission;
sidelink object reception; and
sidelink object transmission and reception.

Optionally, in the embodiments of the present invention, the sidelink object includes at least one of the following:
sidelink control information;
a physical sidelink control channel PSCCH;
a physical sidelink shared channel PSSCH;
a physical sidelink feedback channel PSFCH;
hybrid automatic repeat request-acknowledgement HARQ-ACK information;
a sidelink channel state information reference signal CSI-RS; and
a sidelink phase tracking reference signal PT-RS.

Optionally, in the foregoing embodiments of the present invention, one piece of target information corresponds to at least one set of transmission or reception configuration information.

The first electronic device includes at least one piece of the following target information:
a sidelink signal transmission or reception direction;
a sidelink resource scheduling mode;
sidelink synchronization-related information;
sidelink ID-related information;
an electronic device type;
a sidelink transmission or reception mode;
a sidelink resource pool;
a sidelink bandwidth part BWP;
a carrier supporting sidelink;
a sidelink feedback mechanism;
a sidelink channel state information reference signal;
sidelink search space;
a format of sidelink downlink control information DCI; or
a radio access technology supported by sidelink.

Optionally, in the embodiments of the present invention, the sidelink synchronization-related information includes at least one of the following:
a synchronization resource;
a synchronization priority;
a synchronization source type;
a priority synchronization source configuration;
a current hop-count of the electronic device;
a sidelink synchronization signal;
a sidelink synchronization signal group; and
a synchronization source coverage state.

Optionally, in the embodiments of the present invention, the sidelink ID-related information includes at least one of the following:
a source ID;
a destination ID;
a connection ID;
a service ID;
a group ID of a device group of the electronic device; and
an index of the electronic device in the device group.

Optionally, in the embodiments of the present invention, the sidelink feedback mechanism includes at least one of the following:
no automatic repeat request HARQ feedback mechanism;
a first HARQ feedback mechanism; and
a second HARQ feedback mechanism.

Optionally, in the embodiments of the present invention, the electronic device further includes:
a signaling transmission module, configured to transmit target signaling to the first electronic device, where the target signaling is used for indicating second transmission or reception configuration information in the N sets of transmission or reception configuration information.

Optionally, in the embodiments of the present invention, the target signaling carries a bitmap, and the second transmission or reception configuration information is indicated by the bitmap.

Optionally, in the embodiments of the present invention, the target signaling includes at least one of the following signaling:
switching signaling, used for instructing the first electronic device to switch to the second transmission or reception configuration information indicated by the switching signaling;
activation or deactivation signaling, used for instructing the first electronic device to activate or deactivate the second transmission or reception configuration information indicated by the activation or deactivation signaling; and
sleeping or waking up signaling, used for instructing the first electronic device to enter a sleep or wakeup state and use the second transmission or reception configuration information in the wakeup state.

In the embodiments of the present invention, through configuration of N sets of transmission or reception configuration information, the first electronic device flexibly selects matching first transmission or reception configuration information to perform communication, so that the sidelink communication requirements can be matched. After the first electronic device determines the first transmission or reception configuration information, the overheads for detecting control information can be reduced, thereby saving power.

It should be noted that, the electronic device according to the embodiments of the present invention is an electronic device that can perform the foregoing transmission or reception configuration methods, all embodiments of the foregoing transmission or reception configuration methods are applicable to the electronic device, and same or similar beneficial effects can all be achieved.

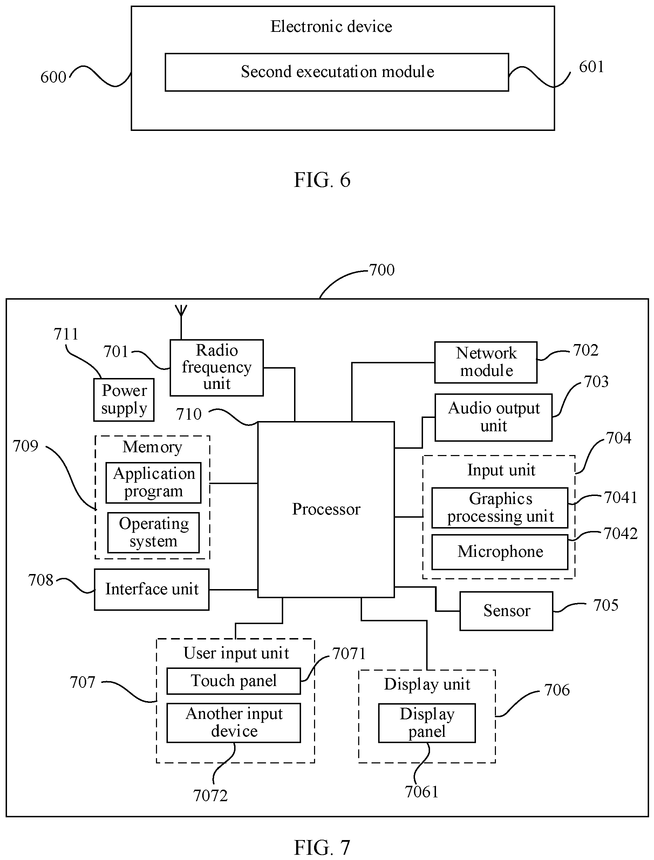

As shown in FIG. 6, an embodiment of the present invention further provides an electronic device 600, the electronic device being a third electronic device and including:
a second execution module 601, configured to: in a case that a first preset condition is met, execute a target behavior or enter a sleep state in a time resource configured by default transmission or reception configuration information; and/or
in a case that a second preset condition is met, enter a wakeup state and execute a target behavior on a first reserved resource of the third electronic device; and/or
in a case that a third preset condition is met, enter a sleep state on a second reserved resource of the third electronic device.

Optionally, in the embodiments of the present invention, the target behavior includes at least one of the following:
sidelink resource sensing;
sidelink resource selection;
sidelink resource reselection;
sidelink object transmission;
sidelink object reception; and
sidelink object transmission and reception.

Optionally, in the embodiments of the present invention, the sidelink object includes at least one of the following:
sidelink control information;
a physical sidelink control channel PSCCH;
a physical sidelink shared channel PSSCH;
a physical sidelink feedback channel PSFCH;
hybrid automatic repeat request-acknowledgeme nt HARQ-ACK information;
a sidelink channel state information reference signal CSI-RS; and
a sidelink phase tracking reference signal PT-RS.

Optionally, in the embodiments of the present invention, the first preset condition includes at least one of the following:
a number of times that the third electronic device fails to transmit a sidelink object is greater than or equal to a first threshold;
a number of times that the third electronic device fails to receive a sidelink object is greater than or equal to a second threshold;
a number of times that the third electronic device receives a negative acknowledgement (NACK) feedback is greater than or equal to a third threshold; and
a number of times that the third electronic device does not receive a feedback is greater than or equal to a fourth threshold.

Optionally, in the embodiments of the present invention, the electronic device further includes:
an obtaining module, configured to obtain the first reserved resource and/or the second reserved resource of the third electronic device in a target manner, where the target manner includes at least one of the following:
configuration by a fourth electronic device;
pre-configuration;
indication by a fifth electronic device through sidelink control information; and
pre-agreement.

In the embodiments of the present invention, the electronic device determines the transmission or reception configuration information or enters a wakeup state or a sleep state through a preset condition mechanism, so that the overheads for detecting control information can be reduced, thereby saving power.

It should be noted that, the electronic device according to the embodiments of the present invention is an electronic device that can perform the foregoing transmission or reception configuration methods, all embodiments of the foregoing transmission or reception configuration methods are applicable to the electronic device, and same or similar beneficial effects can all be achieved.

Preferably, an embodiment of the present invention further provides an electronic device, including a processor, a memory, and a computer program stored in the memory and executable on the processor. The computer program, when executed by the processor, implements the processes of the embodiments of the foregoing transmission or reception configuration methods, and can achieve the same technical effects, which is not described herein again to avoid repetition.

An embodiment of the present invention further provides a computer-readable storage medium, storing a computer program. The computer program, when executed by a processor, implements the processes of the embodiments of the foregoing transmission or reception configuration methods, and can achieve the same technical effects, which is not described herein again to avoid repetition. The computer-readable storage medium is, for example, a read-only memory (Read-Only Memory, ROM), a random access memory (Random Access Memory, RAM), a magnetic disk, or an optical disc.

In a case that the first electronic device is a terminal, the second electronic device is a terminal, or the third electronic device is a terminal, FIG. 7 is a schematic diagram of a hardware structure of a terminal according to the embodiments of the present invention. The terminal 700 includes, but not limited to, components such as a radio frequency unit 701, a network module 702, an audio output unit 703, an input unit 704, a sensor 705, a display unit 706, a user input unit 707, an interface unit 708, a memory 709, a processor 710, and a power supply 711. A person skilled in the art may understand that the terminal structure shown in FIG. 7 does not constitute a limitation to the terminal, and the terminal may include more or fewer components than shown, or combine some components, or have different component arrangements. In the embodiments of the present invention, the terminal includes, but is not limited to, a mobile phone, a tablet computer, a notebook computer, a palmtop computer, an in-vehicle terminal, a wearable device, and a pedometer.

The processor 710 is configured to execute, according to first transmission or reception configuration information, a target behavior in a time resource configured by the first transmission or reception configuration information, where the first transmission or reception configuration information is at least one set of transmission or reception configuration information in N sets of transmission or reception configuration information; and N is an integer greater than or equal to 1.

Alternatively, the processor 710 is configured to configure or pre-configure N sets of transmission or reception configuration information for the first electronic device, where the transmission or reception configuration information is used for configuring a time resource for the first electronic device to execute a target behavior; and N is an integer greater than or equal to 1.

Alternatively, the processor 710 is configured to: in a case that a first preset condition is met, execute a target behavior or enter a sleep state in a time resource configured by default transmission or reception configuration information; and/or in a case that a second preset condition is met, enter a wakeup state and execute a target behavior on a first reserved resource of the third electronic device; and/or in a case that a third preset condition is met, enter a sleep state on a second reserved resource of the third electronic device.

In the embodiments of the present invention, through configuration of N sets of transmission or reception configuration information, the first electronic device flexibly selects matching first transmission or reception configuration information to perform communication, so that the sidelink communication requirements can be matched. After the first electronic device determines the first transmission or reception configuration information, the overheads for detecting control information can be reduced, thereby saving power. In the embodiments of the present invention, the electronic device determines the transmission or reception configuration information or enters a wakeup state or a sleep state through a preset condition mechanism, so that the overheads for detecting control information can be reduced, thereby saving power.

It should be noted that, the electronic device according to the embodiments of the present invention is an electronic device that can perform the foregoing transmission or reception configuration methods, all embodiments of the foregoing transmission or reception configuration methods are applicable to the electronic device, and same or similar beneficial effects can all be achieved.

It should be understood that, in the embodiments of the present invention, the radio frequency unit 701 may be configured to receive and transmit information or receive and transmit a signal during a call. Specifically, after DL data from a base station is received, the DL data is transmitted to the processor 710 for processing. In addition, the radio frequency unit transmits uplink data to the base station. Generally, the radio frequency unit 701 includes, but not limited to, an antenna, at least one amplifier, a transceiver, a coupler, a low noise amplifier, and a duplexer. In addition, the radio frequency unit 701 may further communicate with a network and another device through a wireless communication system.

The terminal may provide, by using the network module 702, wireless broadband Internet access for a user, for example, help the user receive or transmit an email, browse a web page, and access stream media.

The audio output unit 703 may convert audio data received by the radio frequency unit 701 or the network module 702 or stored in the memory 709 into audio signals and output the audio signals as sounds. In addition, the audio output unit 703 may further provide audio output related to specific functions implemented by the terminal 700 (for example, a call signal receiving sound and a message receiving sound). The audio output unit 703 includes a speaker, a buzzer, and a telephone receiver.

The input unit 704 is configured to receive audio or video signals. The input unit 704 may include a graphics processing unit (Graphics Processing Unit, GPU) 7041 and a microphone 7042. The graphics processing unit 7041 performs processing on image data of a static picture or a video that is obtained by an image acquisition device (for example, a camera) in a video acquisition mode or an image acquisition mode. Processed image frames may be displayed on the display unit 706. The image frames processed by the graphics processing unit 7041 may be stored in the memory 709 (or another storage medium) or transmitted through the radio frequency unit 701 or the network module 702. The microphone 7042 may receive sounds and process the sounds into audio data. The processed audio data may be converted, in a phone call mode, into an output in a form that can be transmitted to a mobile communication base station by the radio frequency unit 701.

The terminal 700 further includes at least one sensor 705 such as an optical sensor, a motion sensor, or another sensor. Specifically, the optical sensor includes an ambient light sensor and a proximity sensor. The ambient light sensor may adjust luminance of a display panel 7061 according to brightness of the ambient light. The proximity sensor may switch off the display panel 7061 and/or backlight when the terminal 700 is moved to the ear. As one type of motion sensor, an accelerometer sensor may detect magnitudes of accelerations in various directions (generally, on three axes), may detect a magnitude and a direction of the gravity when static, and may be configured to recognize an attitude of the terminal (for example, switching between landscape orientation and portrait orientation, a related game, and magnetometer attitude calibration), and a function related to vibration recognition (such as a pedometer and a knock). The sensor 705 may further include a fingerprint sensor, a pressure sensor, an iris sensor, a molecular sensor, a gyroscope, a barometer, a hygrometer, a thermometer, and an infrared sensor, and details are not described herein again.

The display unit 706 is configured to display information inputted by the user or information provided for the user. The display unit 706 may include a display panel 7061. The display panel 7061 may be configured by using a liquid crystal display (Liquid Crystal Display, LCD) or an organic light-emitting diode (Organic Light-Emitting Diode, OLED).

The user input unit 707 may be configured to receive input digit or character information, and generate a key signal input related to the user setting and function control of the terminal. Specifically, the user input unit 707 includes a touch panel 7071 and another input device 7072. The touch panel 7071, also referred to as a touch screen, may collect a touch operation of the user on or near the touch panel (such as an operation of the user on or near the touch panel 7071 by using any suitable object or attachment, such as a finger or a stylus). The touch panel 7071 may include two parts: a touch detection apparatus and a touch controller. The touch detection apparatus detects a touch orientation of the user, detects a signal brought by the touch operation, and transmits the signal to the touch controller. The touch controller receives touch information from the touch detection apparatus, converts the touch information into contact coordinates, then transmits the contact coordinates to the processor 710, and receives and executes a command transmitted by the processor 710. In addition, the touch panel 7071 may be implemented by using various types, such as a resistive type, a capacitive type, an infrared type, and a surface acoustic wave type. In addition to the touch panel 7071, the user input unit 707 may further include the another input device 7072. Specifically, the another input device 7072 may include, but not limited to, a physical keyboard, a functional key (such as a volume control key or a switch key), a track ball, a mouse, and a joystick, which is not described herein again.

Further, the touch panel 7071 may cover the display panel 7061. After detecting a touch operation on or near the touch panel 7071, the touch panel transmits the touch operation to the processor 710, to determine a type of a touch event. Then, the processor 710 provides a corresponding visual output on the display panel 7061 according to the type of the touch event. In FIG. 7, the touch panel 7071 and the display panel 7061 implement, as two independent parts, input and output functions of the terminal. However, in some embodiments, the touch panel 7071 and the display panel 7061 may be integrated to implement the input and output functions of the terminal. The details are not limited herein.

The interface unit 708 is an interface for connecting an external apparatus and the terminal 700. For example, the external apparatus may include a wired or wireless headset port, an external power supply (or battery charger) port, a wired or wireless data port, a memory card port, a port for connecting an apparatus with a recognition module, an audio input/output (I/O) port, a video I/O port, and a headphone port. The interface unit 708 may be configured to receive input (for example, data information or power) from the external apparatus and transmit the received input to one or more elements in the terminal 700 or may be configured to transmit data between the terminal 700 and the external apparatus.

The memory 709 may be configured to store a software program and various data. The memory 709 may mainly include a program storage area and a data storage area. The program storage area may store an operating system, an application program required by at least one function (for example, a sound playback function and an image display function), or the like. The data storage area may store data (for example, audio data and an address book) created according to use of a mobile phone. In addition, the memory 709 may include a high speed random access memory, and may further include a non-volatile memory, such as at least one magnetic disk storage device, a flash memory device, or other volatile solid state storage devices.

The processor 710 is a control center of the terminal and connects to various parts of the terminal by using various interfaces and lines. By running or executing the software program and/or module stored in the memory 709, and invoking data stored in the memory 709, the processor performs various functions and data processing of the terminal, thereby performing overall monitoring on the terminal. The processor 710 may include one or more processing units. Preferably, the processor 710 may integrate an application processor and a modem processor. The application processor mainly processes an operating system, a user interface, an application program, and the like. The modem processor mainly processes wireless communication. It may be understood that the foregoing modem processor may not be integrated into the processor 710.

The terminal 700 may further include the power supply 711 (such as a battery) for supplying power to the components. Preferably, the power supply 711 may be logically connected to the processor 710 through a power management system, thereby implementing functions such as charging, discharging, and power consumption management through the power management system.

In addition, the terminal 700 includes some functional modules that are not shown, which are not described in detail herein.

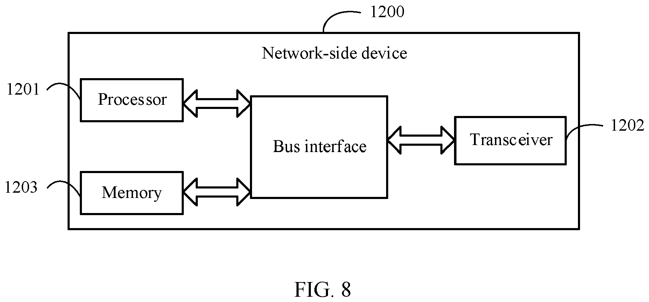

In a case that the second electronic device is a network-side device, FIG. 8 is a structural diagram of a network-side device according to an embodiment of the present invention, which can implement details of the foregoing transmission or reception configuration method and achieve the same effects. As shown in FIG. 8, a network-side device 1200 includes a processor 1201, a transceiver 1202, a memory 1203, and a bus interface, where
the processor 1201 is configured to read a program in the memory 1203 and perform the following process:
configuring or pre-configuring N sets of transmission or reception configuration information for a first electronic device, where the transmission or reception configuration information is used for configuring a time resource for the first electronic device to execute a target behavior; and N is an integer greater than or equal to 1.

In the embodiments of the present invention, through configuration of N sets of transmission or reception configuration information, the first electronic device flexibly selects matching first transmission or reception configuration information to perform communication, so that the sidelink communication requirements can be matched. After the first electronic device determines the first transmission or reception configuration information, the overheads for detecting control information can be reduced, thereby saving power.

It should be noted that, the electronic device according to the embodiments of the present invention is an electronic device that can perform the foregoing transmission or reception configuration methods, all embodiments of the foregoing transmission or reception configuration methods are applicable to the electronic device, and same or similar beneficial effects can all be achieved.

In FIG. 8, a bus architecture may include any number of interconnected buses and bridges, and specifically connects together circuits that are of one or more processors represented by the processor 1201 and of a memory represented by the memory 1203. The bus architecture may further connect various other circuits of a peripheral device, a voltage regulator, a power management circuit, and the like. This is well known in the art, and therefore, no further description is provided in this specification. The bus interface provides an interface. The transceiver 1202 may be a plurality of components, including a transmitter and a receiver, and providing units for communicating with various other apparatuses on a transmission medium.

It should be noted that, the term "include", "comprise", or any other variation is intended to cover a non-exclusive inclusion, so that a process, a method, an object, or a device including a series of elements not only include those elements, but also includes other elements not listed clearly or includes intrinsic elements for the process, the method, the object, or the device. Without more limitations, elements defined by the sentence "including one" do not exclude that there are still other same elements in the process, the method, the object, or the device.

Through the descriptions of the foregoing implementations, a person skilled in the art may clearly understand that the methods according to the foregoing embodiments may be implemented by means of software and a necessary general hardware platform, and certainly, may also be implemented by hardware, but in many cases, the former manner is a better implementation. Based on such an understanding, the technical solutions of the present invention essentially, or the part contributing to the related art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of the present invention.

The embodiments of the present invention are described above with reference to the accompanying drawings. However, the present invention is not limited to the foregoing specific implementations. The foregoing specific implementations are merely exemplary rather than limitative, a person of ordinary skill in the art may still make, under the inspiration of the present invention, various forms without departing from the principle of the present invention and the protection scope of the claims, and all these forms are protected by the present invention.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention Therefore, the protection scope of the present invention shall be subject to the protection scope of the claims.

## Claims

1. A transmission or reception configuration method, applied to a first electronic device, **characterized by** comprising:
executing, according to first transmission or reception configuration information, a target behavior in a time resource configured by the first transmission or reception configuration information, wherein
the first transmission or reception configuration information is at least one set of transmission or reception configuration information in N sets of transmission or reception configuration information, and N is an integer greater than or equal to 1.

2. The method according to claim 1, wherein the transmission or reception configuration information comprises: sidelink discontinuous reception DRX configuration information.

3. The method according to claim 1, wherein the target behavior comprises at least one of following:
sidelink resource sensing,
sidelink resource selection,
sidelink resource reselection,
sidelink object transmission,
sidelink object reception, and
sidelink object transmission and reception.

4. The method according to claim 3, wherein the sidelink object comprises at least one of following:
sidelink control information,
a physical sidelink control channel PSCCH,
a physical sidelink shared channel PSSCH,
a physical sidelink feedback channel PSFCH,
hybrid automatic repeat request-acknowledgement HARQ-ACK information,
a sidelink channel state information reference signal CSI-RS, and
a sidelink phase tracking reference signal PT-RS.

5. The method according to claim 1, wherein one piece of target information corresponds to at least one set of transmission or reception configuration information; and
the first electronic device comprises at least one piece of following target information:
a sidelink signal transmission or reception direction,
a sidelink resource scheduling mode,
sidelink synchronization-related information,
sidelink ID-related information,
an electronic device type,
a sidelink transmission or reception mode,
a sidelink resource pool,
a sidelink bandwidth part BWP,
a carrier supporting sidelink,
a sidelink feedback mechanism,
a sidelink channel state information reference signal,
sidelink search space,
a format of sidelink downlink control information DCI, and
a radio access technology supported by sidelink.

6. The method according to claim 5, wherein the sidelink synchronization-related information comprises at least one of following:
a synchronization resource,
a synchronization priority,
a synchronization source type,
a priority synchronization source configuration,
a current hop-count of the electronic device,
a sidelink synchronization signal,
a sidelink synchronization signal group, and
a synchronization source coverage state.

7. The method according to claim 5, wherein the sidelink ID-related information comprises at least one of following:
a source ID,
a destination ID,
a connection ID,
a service ID,
a group ID of a device group of the electronic device, and
an index of the electronic device in the device group.

8. The method according to claim 5, wherein the sidelink feedback mechanism comprises at least one of following:
no hybrid automatic repeat request HARQ feedback mechanism,
a first HARQ feedback mechanism, and
a second HARQ feedback mechanism.

9. The method according to claim 1 or 5, further comprising:
selecting, according to target information of the first electronic device and/or current time information of the first electronic device, at least one set of transmission or reception configuration information from the N sets of transmission or reception configuration information as the first transmission or reception configuration information;
or
selecting at least one set of transmission or reception configuration information from the N sets of transmission or reception configuration information randomly as the first transmission or reception configuration information;
or
receiving signaling indicating the first transmission or reception configuration information.

10. The method according to claim 1, further comprising:
receiving target signaling transmitted by a second electronic device, wherein the target signaling is used for indicating second transmission or reception configuration information in the N sets of transmission or reception configuration information.

11. The method according to claim 10, wherein the target signaling carries a bitmap, and the second transmission or reception configuration information is indicated by the bitmap.

12. The method according to claim 10, wherein the target signaling comprises at least one of following signaling:
switching signaling, used for instructing the first electronic device to switch to the second transmission or reception configuration information;
activation or deactivation signaling, used for instructing the first electronic device to activate or deactivate the second transmission or reception configuration information; and
sleeping or waking up signaling, used for instructing the first electronic device to enter a sleep or wakeup state and use the second transmission or reception configuration information in the wakeup state.

13. The method according to claim 12, further comprising:
executing the target behavior in a time resource configured by the second transmission or reception configuration information.

14. A transmission or reception configuration method, applied to a second electronic device, the method comprising:
configuring or pre-configuring N sets of transmission or reception configuration information for a first electronic device, wherein the transmission or reception configuration information is used for configuring a time resource for the first electronic device to execute a target behavior; and N is an integer greater than or equal to 1.

15. The method according to claim 14, wherein the transmission or reception configuration information comprises: sidelink discontinuous reception DRX configuration information.

16. The method according to claim 14, wherein the target behavior comprises at least one of following:
sidelink resource sensing,
sidelink resource selection,
sidelink resource reselection,
sidelink object transmission,
sidelink object reception, and
sidelink object transmission and reception.

17. The method according to claim 16, wherein the sidelink object comprises at least one of following:
sidelink control information,
a physical sidelink control channel PSCCH,
a physical sidelink shared channel PSSCH,
a physical sidelink feedback channel PSFCH,
hybrid automatic repeat request-acknowledgement HARQ-ACK information,
a sidelink channel state information reference signal CSI-RS, and
a sidelink phase tracking reference signal PT-RS.

18. The method according to claim 14, wherein one piece of target information corresponds to at least one set of transmission or reception configuration information; and
the first electronic device comprises at least one piece of following target information:
a sidelink signal transmission or reception direction,
a sidelink resource scheduling mode,
sidelink synchronization-related information,
sidelink ID-related information,
an electronic device type,
a sidelink transmission or reception mode,
a sidelink resource pool,
a sidelink bandwidth part BWP,
a carrier supporting sidelink,
a sidelink feedback mechanism,
a sidelink channel state information reference signal,
sidelink search space,
a format of sidelink downlink control information DCI, and
a radio access technology supported by sidelink.

19. The method according to claim 18, wherein the sidelink synchronization-related information comprises at least one of following:
a synchronization resource,
a synchronization priority,
a synchronization source type,
a priority synchronization source configuration,
a current hop-count of the electronic device,
a sidelink synchronization signal,
a sidelink synchronization signal group, and
a synchronization source coverage state.

20. The method according to claim 18, wherein the sidelink ID-related information comprises at least one of following:
a source ID,
a destination ID,
a connection ID,
a service ID,
a group ID of a device group of the electronic device, and
an index of the electronic device in the device group.

21. The method according to claim 18, wherein the sidelink feedback mechanism comprises at least one of following:
no automatic repeat request HARQ feedback mechanism,
a first HARQ feedback mechanism, and
a second HARQ feedback mechanism.

22. The method according to claim 14, further comprising:
transmitting target signaling to the first electronic device, wherein the target signaling is used for indicating second transmission or reception configuration information in the N sets of transmission or reception configuration information.

23. The method according to claim 22, wherein the target signaling carries a bitmap, and the second transmission or reception configuration information is indicated by the bitmap.

24. The method according to claim 22, wherein the target signaling comprises at least one of following signaling:
switching signaling, used for instructing the first electronic device to switch to the second transmission or reception configuration information;
activation or deactivation signaling, used for instructing the first electronic device to activate or deactivate the second transmission or reception configuration information; or
sleeping or waking up signaling, used for instructing the first electronic device to enter a sleep or wakeup state and use the second transmission or reception configuration information in the wakeup state.

25. A transmission or reception configuration method, applied to a third electronic device, the method comprising:
in a case that a first preset condition is met, executing a target behavior or entering a sleep state in a time resource configured by default transmission or reception configuration information;
and/or
in a case that a second preset condition is met, entering a wakeup state and executing a target behavior on a first reserved resource of the third electronic device;
and/or
in a case that a third preset condition is met, entering a sleep state on a second reserved resource of the third electronic device.

26. The method according to claim 25, wherein the target behavior comprises at least one of following:
sidelink resource sensing,
sidelink resource selection,
sidelink resource reselection,
sidelink object transmission,
sidelink object reception, and
sidelink object transmission and reception.

27. The method according to claim 26, wherein the sidelink object comprises at least one of following:
sidelink control information,
a physical sidelink control channel PSCCH,
a physical sidelink shared channel PSSCH,
a physical sidelink feedback channel PSFCH,
hybrid automatic repeat request-acknowledgement HARQ-ACK information,
a sidelink channel state information reference signal CSI-RS, and
a sidelink phase tracking reference signal PT-RS.

28. The method according to claim 25, wherein the first preset condition comprises at least one of following:
a number of times that the third electronic device fails to transmit a sidelink object is greater than or equal to a first threshold;
a number of times that the third electronic device fails to receive a sidelink object is greater than or equal to a second threshold;
a number of times that the third electronic device receives a negative acknowledgement NACK feedback is greater than or equal to a third threshold; and
a number of times that the third electronic device does not receive a feedback is greater than or equal to a fourth threshold.

29. The method according to claim 25, further comprising:
obtaining the first reserved resource and/or the second reserved resource of the third electronic device in a target manner, wherein the target manner comprises at least one of following:
configuration by a fourth electronic device,
pre-configuration,
indication by a fifth electronic device through sidelink control information, and
pre-agreement.

30. An electronic device, the electronic device being a first electronic device and comprising:
a first execution module, configured to execute, according to first transmission or reception configuration information, a target behavior in a time resource configured by the first transmission or reception configuration information, wherein
the first transmission or reception configuration information is at least one set of transmission or reception configuration information in N sets of transmission or reception configuration information; and N is an integer greater than or equal to 1.

31. An electronic device, the electronic device being a second electronic device and comprising:
a configuration module, configured to configure or pre-configure N sets of transmission or reception configuration information for a first electronic device, wherein the transmission or reception configuration information is used for configuring a time resource for the first electronic device to execute a target behavior; and N is an integer greater than or equal to 1.

32. An electronic device, the electronic device being a third electronic device and comprising:
a second execution module, configured to: in a case that a first preset condition is met, execute a target behavior or enter a sleep state in a time resource configured by default transmission or reception configuration information; and/or
in a case that a second preset condition is met, enter a wakeup state and execute a target behavior on a first reserved resource of the third electronic device; and/or
in a case that a third preset condition is met, enter a sleep state on a second reserved resource of the third electronic device.

33. An electronic device, comprising a processor, a memory, and a computer program stored in the memory and executable on the processor, wherein when the computer program is executed by the processor, steps of the transmission or reception configuration method according to any one of claims 1 to 13 are implemented; or when the computer program is executed by the processor, steps of the transmission or reception configuration method according to any one of claims 14 to 24 are implemented; or when the computer program is executed by the processor, steps of the transmission or reception configuration method according to any one of claims 25 to 29 are implemented.

34. A computer-readable storage medium, storing a computer program, wherein when the computer program is executed by a processor, steps of the transmission or reception configuration method according to any one of claims 1 to 13 are implemented; or when the computer program is executed by a processor, steps of the transmission or reception configuration method according to any one of claims 14 to 24 are implemented; or when the computer program is executed by a processor, steps of the transmission or reception configuration method according to any one of claims 25 to 29 are implemented.

35. A computer program product, wherein when the computer program product is executed by at least one processor, the transmission or reception configuration method according to any one of claims 1 to 13 is implemented; or the transmission or reception configuration method according to any one of claims 14 to 24 is implemented; or the transmission or reception configuration method according to any one of claims 25 to 29 is implemented.
